# EUROPÄISCHE PATENTSCHRIFT

(11) **EP 1 376 460 B1**
(45) Veröffentlichungstag und Bekanntmachung des Hinweises auf die Patenterteilung: **09.04.2008**
(21) Anmeldenummer: 03102645.3
(22) Anmeldetag: 30.05.1996
(51) Int. Cl.: G06K 19/07

(54) **Chipkarte**
Chip card
Carte à puce

(30) Priorität: 02.06.1995 AT 94795
(43) Veröffentlichungstag der Anmeldung: 02.01.2004
(62) Teilanmeldung aus: 96913696.9
(73) Patentinhaber: NXP B.V., 5656 AG Eindhoven (NL)
(72) Erfinder: Berger, Dominik Josef, 52088, Aachen (DE); Eber, Wolfgang, 52088, Aachen (DE); Holweg, Gerald, 52088, Aachen (DE)
(74) Vertreter: Meyer, Michael Josef

(56) Entgegenhaltungen:
- WO-A-93/09551
- DE-C- 3 935 364
- GB-A- 2 245 725
- PATENT ABSTRACTS OF JAPAN vol. 010, no. 341 (P-517), 18. November 1986 (1986-11-18) & JP 61 143890 A (TOSHIBA CORP), 1. Juli 1986 (1986-07-01)

## Beschreibung

Die vorliegende Erfindung betrifft eine Chipkarte nach dem Oberbegriff des unabhängigen Anspruchs 1.

Aus der DE-C-39 35 364 ist eine Chipkarte bekannt, die sowohl über Kontakte als auch über zumindest eine Antennenspule mit einer zugehörigen Schreib-Lese-Station koppelbar ist, wobei die Schreib-Lese-Station über die Kopplung die Energie für den Betrieb der Chipkarte liefert und auch der Datenaustausch über diese Kopplung erfolgt und wobei für den Fall der Kopplung über die Antennenspule(n) ein Gleichrichter zur Energieversorgung vorgesehen ist.

Chipkarten sind hoch integrierte elektronische Einheiten (Chips), verpackt in Kunststoff in Kreditkartenformat. Je nach Anwendungsbereich kennt man heute z.B. elektronische Fahrscheine, GSM-Karten, Telefonkarten und viele mehr. Die elektronischen Einheiten unterscheiden sich je nach Einsatzbereich vor allem in den Parametern Speicherkapazität, Zugriffsschutz, Datenübertragungsrate, Flexibilität und Übertragungsabstand für kontaktlose Chipkarten.

In den meisten Fällen besitzen Chipkarten ein Kontaktfeld für den kontaktbehafteten Betrieb. In letzter Zeit werden aber bereits verstärkt kontaktlose Karten eingesetzt, die sich vor allem durch höhere Zuverlässigkeit, komfortablere Handhabung und Vandalensicherheit für die zugehörigen kontaktlosen Schreib-Lese-Stationen auszeichnen. Beim kontaktlosen Betrieb erfolgt Energie- und Taktübertragung zur Kartenelektronik bzw. bidirektionale Datenübertragung durch induktive Kopplung zwischen der Antenne der Schreib-Lese-Station und der Antennenspule der Chipkarte. Die Versorgungsspannung der Chipkarte wird durch Gleichrichten eines von der Schreib-Lese-Station ausgesendeten HF-Signals erzeugt. Beim kontaktbehafteten Betrieb werden Versorgungsspannung, Takt und Daten über getrennte Kontakte geführt.

Aus der DE-C-39 35 364 ist nun auch schon eine Chipkarte bekannt, die sowohl über Kontakte als auch über induktive Kopplung betrieben werden kann. Die Betriebsarten können wahlweise und völlig gleichberechtigt durch Verwendung entweder einer kontaktlosen oder einer kontaktbehafteten Schreib-Lese-Station aktiviert werden.

Zu diesem Zweck ist gemäß der DE-C-39 35 364 ein Multiplexer vorgesehen, an den einerseits die Signale der Kontakte eines Kontaktfeldes und andererseits die von den Spulen empfangenen und entsprechend aufbereiteten Signale (Versorgungsspannung, Takt, Daten) angeschlossen sind. An die Ausgänge des Multiplexers ist eine Schaltung, wie sie auch bei Chipkarten, die nur für kontaktbehafteten Betrieb ausgelegt sind, vorgesehen ist, angeschlossen (z.B. ein Rechenwerk und eine Speichereinheit). Um festzulegen, welche Signale vom Multiplexer an die Ausgänge durchgeschaltet werden, (die an den Kontakten des Kontaktfeldes anliegenden Signale oder die von den Spulen empfangenen und entsprechend aufbereiteten Signale), ist ein Komparator vorgesehen, der die Gleichspannung, die aus dem von den Spule n empfangenen HF-Signal gewonnen wird, mit der am Kontaktfeld anliegenden Gleichspannung vergleicht.

Es ist Aufgabe der vorliegenden Erfindung, eine Chipkarte der eingangs genannten Art für unterschiedliche Anwendungsbereiche und Funktionen zu schaffen.

Diese Aufgabe wird durch eine Chipkarte gemäß dem Oberbegriff des unabhängigen Anspruchs 1 gelöst durch die kennzeichnenden Merkmale des unabhängigen An spruchs 1.

Erfindungsgemäß sind somit die Speicherzugriffsrechte zum Zugriff auf einen von der Chipkarte umfassten Datenspeicher abhängig von den Betriebsarten "Kopplung über die Kontakte" und "Kopplung über die Antennenspule(n)" unterschiedlich konfigurierbar. Insbesondere können zwei Speicherbereiche vorgesehen sein, die abhängig von den Betriebsarten "Kopplung über die Kontakte" und "Kopplung über die Antennenspule(n)" alternativ aktiviert sind. Auf diese Weise kann ein- und dieselbe Karte zwei völlig unterschiedliche Funktionen ausüben, je nachdem, in welcher Betriebsart sie eingesetzt wird. (z.B. elektronischer Fahrschein in kontaktlosem Betrieb und Telefonwertkarte in kontaktbehaftetem Betrieb).

Nachfolgend wird die Erfindung anhand der beiliegenden Zeichnungen erläutert. Es zeigt:
- Fig. 1 eine schematische Darstellung der elektrischen Schaltung mit der geringstmöglichen Anzahl von Einzelkomponenten;
- Fig. 2 eine mögliche Verpackung dieser Schaltung in einer Plastikkarte;
- Fig. 3 das elektrische Blockschaltbild des monolithisch integrierbaren Schaltkreises (Chip); und
- Fig, 4 ein Blockschaltbild analog zu Fig. 3, jedoch von einer anderen Ausführungsform.

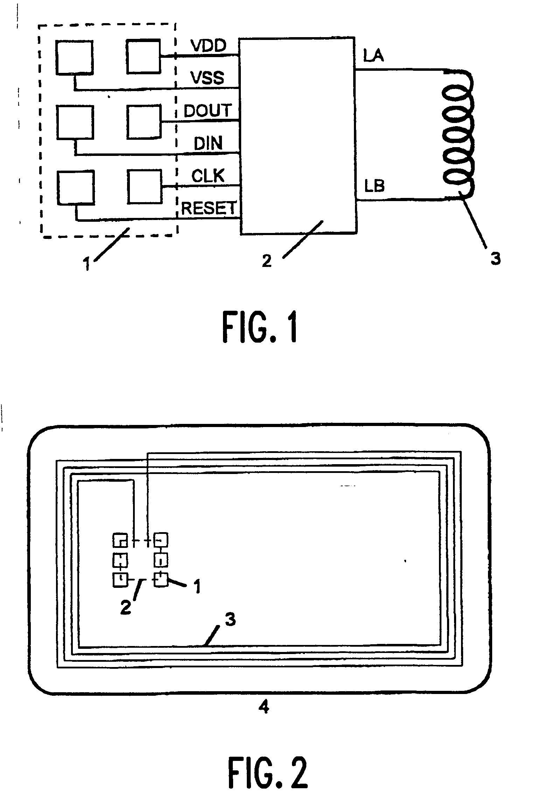

Wie aus Fig. 1 ersichtlich, besitzt ein monolithisch integrierter Schaltkreis bzw. Chip 2 Anschlüsse LA, LB für eine Antennenspule 3 und Anschlüsse VDD, VSS, DOUT, DIN, CLK, RESET für ein Kontaktfeld 1. (Zwischen VDD und VSS liegt die Versorgungsspannung; über DOUT werden Daten zur Schreib-Lese-Station, über DIN zur Chipkarte übertragen; über CLK wird ein Taktsignal zur Chipkarte übertragen, über RESET ein Nullungssignal.) Wie aus Fig. 2 ersichtlich, ist der Chip 2, wie bei rein kontaktbehafteten Karten üblich, auf der Unterseite des Kontaktfeldes 1 montiert. Eine Antennenspule 3, bestehend aus einigen Windungen, ist in der Chipkarte 4 eingebettet, wahlweise gewickelt, geätzt oder gedruckt. Rein kontaktbehaftete Kartentechnologie kann daher in einfacher Weise bei Verwendung eines dafür geeigneten Chips auf kontaktlosen Betrieb erweitert werden, indem der unter dem Kontaktfeld 1 sitzende Chip 2 zusätzlich über zwei Anschlüsse mit einer in der Chipkarte 4 eingebetteten Antennenspule 3 verbunden wird.

Die in Fig. 2 dargestellte Realisierung ermöglicht die maximale Reichweite bei kontaktlosem Betrieb für ein vorgegebenes Kartenformat, da hier die Antennenspule 3 so platziert ist, dass sich maximale Wicklungsfläche ergibt.

Es sind aber auch andere Antennenanordnungen im Rahmen der vorliegenden Erfindung möglich, sodass z.B. mit ein und derselben Karte die internationalen Standards sowohl für kontaktbehaftete Karten (ISO 7816) als auch für kontaktlose Karten (ISO 10536) erfüllt werden. Auch die Kombinationsmöglichkeit mit Magnetstreifen bleibt vollständig erhalten.

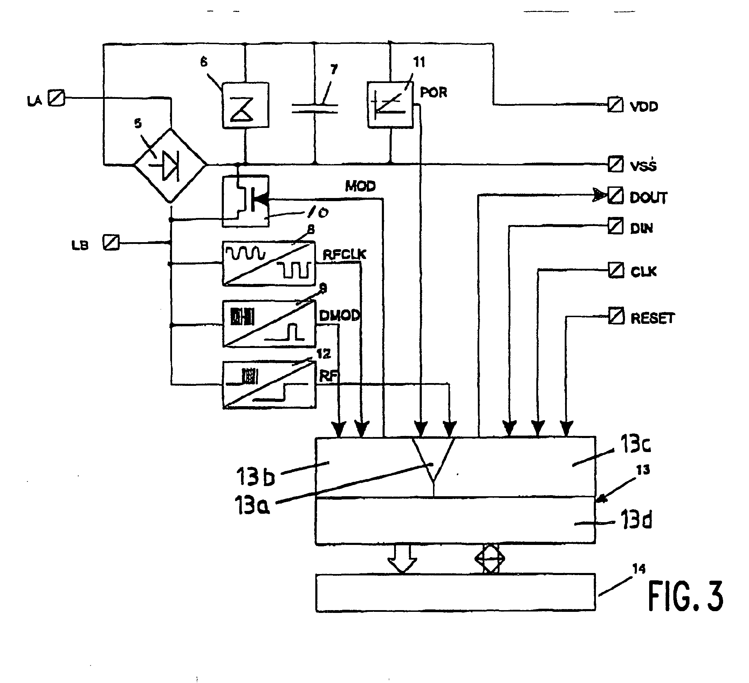

Anhand von Fig. 3 wird nun die Funktion des Chips 2 erläutert. Beim kontaktlosen Betrieb werden über LA und LB Energie, Takt und Daten empfangen bzw. Daten gesendet. Ein dafür verwendbares Übertragungsverfahren ist in der AT-B-395 224 dokumentiert. Das empfangene HF-Signal wird in einem Gleichrichter 5 gleichgerichtet, von einem Kondensator 7 geglättet und von einem Parallelregler 6 (im einfachsten Fall einer Zenerdiode) in seiner Größe begrenzt. Aus der Wechselspannung wird weiter in einer Taktaufbereitungsschaltung 8 der Takt für die Chip-Schaltung abgeleitet. In einer Demodulationsstufe 9 werden die empfangenen Daten aufbereitet, und mit einer Modulationsstufe 10 werden Daten zurückgesendet. Mit einer Pegelerkennungsschaltung 11 wird die Überschreitung der minimal erforderlichen Betriebsspannung angezeigt. Zur Realisierung von kontaktloser und kontaktbehafteter Schnittstelle am gleichen Chip 2 ist eine automatische Erkennung des Betriebsfalles zur Aktivierung der korrekten Schnittstelle erforderlich. Dies wird mit einer Wechselspannungserkennungsschaltung 12 realisiert, die bei Vorliegen einer Wechselspannung an der Antennenspule 3 die kontaktlose Schnittstelle und ansonsten die kontaktbehaftete Schnittstelle aktiviert. Eine Kontrolleinheit 13 steuert abhängig von Betriebsfall entweder die kontaktlose oder die kontaktbehaftete Schnittstelle und regelt den Zugriff auf einen Datenspeicher 14 über einen unidirektionalen Adressbus und einen bidirektionalen Datenbus.

Die Kontrolleinheit 13 besteht aus vier Bereichen; Bereich 13a enthält die Schaltungen, die erkennen, ob die Chipkarte überhaupt in Betrieb ist (dies wird von der Pegelerkennungsschaltung 11 ermittelt), und wenn ja, welche Schnittstelle aktiv ist. Bereich 13b enthält die Schaltungen, die die kontaktlose Schnittstelle ansteuern, und Bereich 13c die Schaltungen, die die kontaktbehaftete Schnittstelle ansteuern. Bereich 13d enthält schließlich die Schaltungen, die für beide Betriebsarten erforderlich sind (hier werden z.B. die Daten aus dem Datenspeicher 14 abgerufen). Um den Stromverbrauch gering zu halten (dies ist vor allem für den kontaktlosen Betrieb zur Erzielung einer großen Reichweite wichtig), wird je nach Betriebsart jeweils der Bereich 13b oder der Bereich 13c in einen stromsparenden Ruhezustand versetzt.

Die Kontrolleinheit 13 kann je nach Applikation sehr unterschiedlich realisiert werden:
- verschiedenste Protokolle und Baudraten für kontaktlose und/oder kontaktbehaftete Schnittstelle
- Kryptografie, Authentifikation, PIN
- Speicherzugriffsschutz mit getrennten Speicherzugriffsbereichen je nach Betrieb über kontaktlose oder kontaktbehaftete Schnittstelle
- Realisierung mittels Mikroprozessors oder Logikgatter
- Reduktion des Stromverbrauches durch Abschaltung nicht benötigter Schaltungsteile im kontaktlosen Betriebsfall
- Antikollisionsprozedur für den kontaktlosen Betrieb mehrerer Karten am Arbeitsabstand einer Schreib-Lese-Station usw.

Entsprechend der vorangegangenen Beschreibung lässt sich eine Chipkarte mit minimaler Anzahl von Einzelkomponenten und daher mit minimalem verarbeitungstechnischen Aufwand realisieren, die ohne Einschränkung in Funktionalität und Normkompatibilität sowohl über eine kontaktlose als auch über eine kontaktbehaftete Schnittstelle betrieben werden kann.

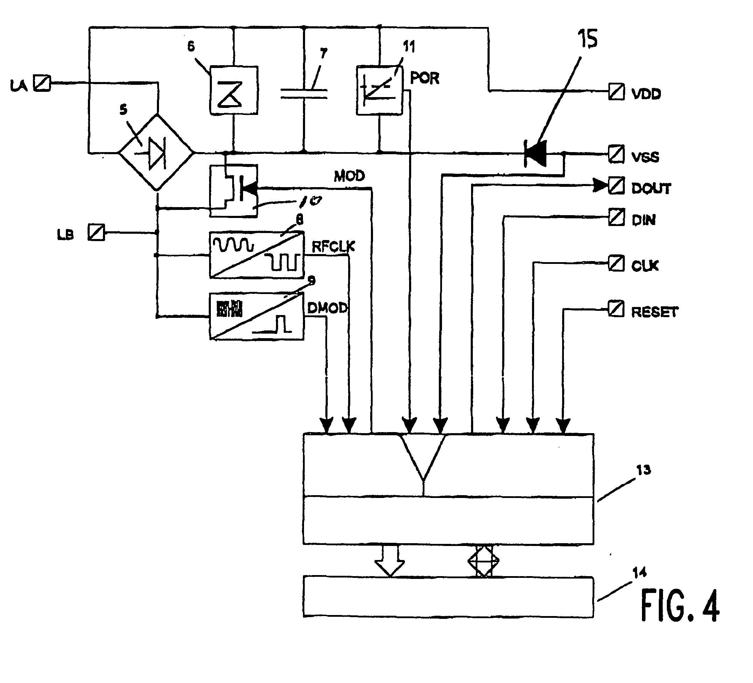

Fig. 4 unterscheidet sich von Fig. 3 dadurch, dass die Wechselspannungserkennnungsschaltung 12 fehlt. Statt dessen ist zwischen dem Anschluss VSS und dem Gleichrichter 5 eine Diode 15 vorgesehen, die den Anschluss VSS vom Gleichrichter 5 entkoppelt. Am Anschluss VSS liegt daher keine Spannung an, wenn die Betriebsspannung von der Antennenspule 3 geliefert wird, sondern nur dann, wenn die Betriebsspannung von dem mit dem Anschluss VSS verbundenen Kontakt geliefert wird. Der Anschluss VSS ist mit der Kontrolleinheit 13 direkt verbunden, so dass diese mit einer Spannungserkennungsschaltung die Betriebsart erkennen kann.

## Patentansprüche

1. Chipkarte, die sowohl über Kontakte (1) als auch über zumindest eine Antennenspule (3) mit einer zugehörigen Schreib-Lese-Station koppelbar ist, wobei die Schreib-Lese-Station über die Kopplung die Energie für den Betrieb der Chipkarte liefert und auch der Datenaustausch über diese Kopplung erfolgt, welche Chipkarte versehen ist mit Umschaltungsmitteln zum Umschalten der Chipkarte zwischen den Betriebsarten "Kopplung über die Kontakte" und "Kopplung über die Antennenspule(n)",
**dadurch gekennzeichnet,**
**dass** die Chipkarte (4) ferner versehen ist mit Mitteln zum Konfigurieren von den Speicherzugriffsrechten abhängig von den Betriebsarten "Kopplung über die Kontakte" und/oder "Kopplung über die Antennenspule(n)".

2. Chipkarte nach Anspruch 1,
**dadurch gekennzeichnet,**
**dass** zwei Speicherbereiche vorgesehen sind, die abhängig von den Betriebsarten "Kopplung über die Kontakte" und "Kopplung über die Antennenspule(n)" alternativ aktivierbar sind.

## Claims

1. A chip card which can be coupled to an associated write/read station both via contacts (1) and via at least one antenna coil (3), the write/read station supplying via the coupling the energy for the operation of the chip card and also the data exchange being effected via this coupling, the chip card being provided with switch over means for switching over the chip card between the modes of operation: "coupling via the contacts" and "coupling via the antenna coil(s)", **characterized in that** the chip card (4) further includes means for configuring the memory access rights in dependence on the modes of operation "coupling via the contacts" and/or "coupling via the antenna coil(s)".

2. A chip card as claimed in claim 1, **characterized in that** two memory areas are provided which can alternatively be activated in dependence on the operating modes "coupling via the contacts" and "coupling via the antenna coil(s)".

## Revendications

1. Carte à puce qui peut être accouplée aussi bien par des contacts (1) que par au moins une bobine d'antenne (3) à un poste de lecture-écriture associé, le poste lecture-écriture fournissant, par l'intermédiaire du couplage, l'énergie pour le fonctionnement de la carte à puce et réalisant également l'échange de données par l'intermédiaire de ce couplage, laquelle carte à puce est munie de moyens de commutation permettant de commuter la carte à puce entre les types de fonctionnement "couplage par les contacts" et "couplage par la ou les bobines d'antenne",
**caractérisée en ce que**
la carte à puce (4) est, de plus, munie de moyens pour la configuration des droits d'accès à la mémoire en fonction des types de fonctionnement "couplage par les contacts" et/ou "couplage par la bobine ou les bobines d'antenne".

2. Carte à puce selon la revendication 1,
**caractérisée en ce que**
il est prévu deux zones de mémoire qui sont dépendantes des types de fonctionnement "couplage par les contacts" et "couplage par la bobine ou les bobines d'antenne" pouvant être activés de façon alternative.
